Europäisches Patentamt

European Patent Office

Office européen des brevets

(11) Veröffentlichungsnummer: **0 240 731**
**A2**

(12) **EUROPÄISCHE PATENTANMELDUNG**

(21) Anmeldenummer: 87103153.0

(22) Anmeldetag: 05.03.87

(51) Int. Cl.4: **C04B 35/00 , C04B 35/64**

(30) Priorität: 15.03.86 DE 3608763

(43) Veröffentlichungstag der Anmeldung:
14.10.87 Patentblatt 87/42

(84) Benannte Vertragsstaaten:
**AT BE CH DE ES FR GB IT LI NL SE**

(71) Anmelder: **Nukem GmbH**
**Rodenbacher Chaussee 6 Postfach 11 00 80**
**D-6450 Hanau 11(DE)**

Anmelder: **Kernforschungsanlage Jülich**
**Gesellschaft mit beschränkter Haftung**
**Stetternischer Forst**
**D-5170 Jülich(DE)**

(72) Erfinder: **Hackstein, Karl-Gerhard, Dr.**
**Röntgenstrasse 20**
**D-6450 Hanau(DE)**
Erfinder: **Hrovat, Milan, Dr.**
**Meisenweg 7**
**D-6458 Rodenbach(DE)**
Erfinder: **Stritzker, Bernd Walter, Dr.**
**Auf der Lache 8**
**D-5172 Linnich(DE)**

(74) Vertreter: **Nowak, Gerhard**
**DEGUSSA AG Fachbereich Patente**
**Rodenbacher Chaussee Postfach 1345**
**D-6450 Hanau 1(DE)**

(54) **Verfahren zur Herstellung von keramischen Formkörpern.**

(57) Zur Herstellung mikrorissfreier kermamischer Formkörper werden vor dem Pressen und Sintern die Pulver einer hochenergetischen Strahlung mit Energien $\geq$ 10 keV ausgesetzt, insbesondere einer Ionenstrahlung.

EP 0 240 731 A2

## Verfahren zur Herstellung von keramischen Formkörpern

Die Erfindung betrifft ein Verfahren zur Herstellung von ein-oder mehrphasigen keramischen Formkörpern aus Oxiden, Karbiden und/oder Nitriden der Elemente Aluminium, Silizium, Titan, Zirkonium, Niob, Tantal, Wolfram und Molybdän durch Pressen entsprechender Pulver und Sintern der Preßlinge bei Temperaturen oberhalb 1000° C.

An keramische Formkörper im z.B. Hochtemperatureinsatz werden neben der Temperaturbeständigkeit und einem isotropen-thermischen Verhalten besonders hohe Anforderungen an die mechanische Festigkeit, wie. z. B. Biegefestigkeit und Rißzähigkeit, in allen drei Achsen des Formkörpers gestellt. Dabei spielen insbesondere Mikrorisse sowie die Bindungskräfte an den Korngrenzen der Pulver eine erhebliche Rolle für diese Eigenschaften. Normalerweise wird zur Herstellung solcher Formkörper ein keramisches Pulver bestimmter Korngröße bzw. Korngrößenverteilung und bestimmter BET-Oberfläche mit oder ohne Bindemittel verpreßt und der Preßling dann gesintert, wobei beim Sinterprozeß ein Schrumpfen des Preßlings unter Verminderung der BET-Oberfläche erfolgt und gleichzeitig ein Kornwachstum eintritt Die Schrumpfung der Preßlinge während des Sinterns ist eine der Ursachen für unzulässig hohe Spannungen im keramischen Formkörper, die zur Ausbildung von unerwünschten Mikrorissen führen können Daneben ist in vielen Fällen die scharfe Abgrenzung der Korngrenzen der Pulver zueinander nach dem Sinterprozess ein Kriterium für konventionell hergestellte keramische Formkörper.

Diese Gefügeausbildungen beeinflussen aber ganz eindeutig die mechanischen Eigenschaften der Formkörper und zwar in der Art, daß sie immer zu niedrigen Kenndaten führen.

Es war daher Aufgabe der vorliegenden Erfindung, ein Verfahren zur Herstellung von ein-oder mehrphasigen keramischen Formkörpern aus Oxiden, Karbiden und/oder Nitriden der Elemente Aluminium, Silizium, Titan, Zirkonium, Niob, Tantal, Wolfram und Molybdän durch Pressen entsprechender Pulver und Sintern der Preßlinge bei Temperaturen oberhalb 1000° C zu entwickeln, bei dem möglichst wenig Mikrorisse beim Sintern entstehen, möglichst geringes Kornwachstum erfolgt und die scharfen Korngrenzen möglichst aufgehoben werden.

Diese Aufgabe wird erfindungsgemäß dadurch gelöst, daß die Pulver vor dem Pressen einer hochenergetischen Strahlung mit Energien $\geq$ 10 keV ausgesetzt werden.

Vorzugsweise werden die Pulver einer Ionenstrahlung ausgesetzt, wobei sich vor allem Ionen der Elemente Stickstoff, Silizium, Eisen, Nickel und Chrom bewährt haben. Als besonders vorteilhaft hat es sich erwiesen, wenn die Pulver mit einer Dosis von $10^{16}$ bis $10^{18}$ Teilchen/cm² bestrahlt werden, wobei die Energie der Strahlung vorzugsweise 100 bis 150 keV beträgt.

Durch die Behandlung der Pulver vor dem Pressen mit hochenergetischer Strahlung werden diese aktiviert. Dabei können auch hochdichte (praktisch also totgesinterte) keramische Pulver durch Beschuß mit schweren Ionen, z.B. mit Stickstoffionen, in der Oberflächenzone mit einer Eindringtiefe von etwa 0,1 $\mu$m so gestört bzw. aktiviert werden, daß die Oberfläche in dieser Randzone in eine weitgehend amorphe Struktur mit einer erhöhten inneren Energie überführt wird.

Dadurch können auch dichte, bereits vorgesinterte Pulver zur Herstellung von Formkörpern verwendet werden

Die bestrahlten keramischen Pulver können dichter verpresst werden, so daß die Schrumpfung beim Sintern, die bei konventionellen Verfahren bis zu 50 % betragen kann, wesentlich erniedrigt wird. Dadurch tritt praktisch keine Mikrorißbildung auf. Die aktivierten Kornoberflächen sintern derart zusammen, daß keine scharfen Korngrenzen mehr erkennbar sind. Auch ein übermäßiges Kornwachstum wird hierdurch unterbunden. Die aktivierten Oberflächen, die normalerweise eine BET-Oberfläche von mehr als 20 m²/g aufweisen, erlauben außerdem eine Senkung der Sintertemperatur.

Neben Ionenstrahlen können auch Laserstrahlen oder sonstige hochenergetische Strahlen, wie Elektronenstrahlen, zur Aktivierung der keramischen Pulver eingesetzt werden.

Bei mehrphasigen keramischen Formkörpern können wegen der aktivierten Oberflächen beim Sintern sich Mischkristalle oder neue Phasen bilden. Den gleichen Effekt kann man auch durch das Implantieren geeigneter Ionen erreichen.

Mit dem erfindungsgemäßen Verfahren gewinnt man keramische Formkörper für den Hochleistungsbereich, die in ihren mechanischen Eigenschaften den Produkten weit überlegen sind, die nach konventionellen Verfahren hergestellt wurden.

Folgende Beispiele sollen das erfindungsgemäße Verfahren näher erläutern:

1. Ein mit 5 Gew -% Yttriumoxid homogen vermischtes Zirkonoxidpulver von einer BET-Oberfläche von 15 m²/g wurde in einem Gesenk mit einem Druck von 700 MPa zu einem Zylinder mit den Abmessungen Ø = 10 mm, H = 12 mm verpreßt, wobei eine grüne Dichte des Preßkörpers von 60 % der theoretischen Dichte des Materials erreicht wurde. Dieser Preßling wurde anschließend bei einer Temperatur von 1500° C und einer Sinterzeit von 4 Stunden an Luft gesintert.

2. Parallel dazu wurde ein Ausgangspulver gemäß Beispiel 1 ohne vorhergehende Verpressung bei 1500° C totgebrannt und dann in einer Beschleunigungsanlage mit Stickstoffionen von rund 30 keV aktiviert, wobei eine Dosis von $2 \cdot 10^{17}$ Stickstoffionen/cm² angewendet wurde. Danach wurde das Pulver in einem Gesenk ebenfalls mit 700 MPa verpreßt, wobei eine grüne Dichte des Preßlings von 80 % der Theorie erreicht wurde. Die anschließende Sinterung dieses Körpers erfolgte wie oben beschrieben. Bei der Sinterung schrumpfte dieser Formkörper nur um 16 Vol.-% auf eine Dichte von 96 % der theoretischen Dichte. Die Untersuchungen der mechanischen Eigenschaften beider Körper im Hinblick auf die Bruchzähigkeit, Biegefestigkeit und den Elastizitätsmodul ergeben folgende Werte:

| | Formkörper A (bestrahltes Pulver) Beispiel 2 | Formkörper B (unbestrahltes Pulver) gemäß Beispiel 1 |
|---|---|---|
| Bruchzähigkeit | 11 MPa m$^{1/2}$ | 7 MPa m$^{1/2}$ |
| Biegefestigkeit | 1200 MPa | 650 MPa |
| E-Modul | 160 GPa | 210 GPa |

3. Es wurde Aluminiumoxidpulver und Titankarbidpulver - wie in Beispiel 2 beschrieben - mit Nickelionen von rund 40 keV mit einer Dosis von $8 \cdot 10^{16}$ Ionen/cm² beschossen. Beide Pulver wurden dann gemischt, gepreßt und bei 1300° C gesintert, wobei eine übergangslose Verbindung des Titankarbids mit dem Aluminiumoxid in der ionenbestrahlten Schicht erfolgte.

4. Analog Beispiel 3 wurde Aluminiumoxidpulver mit Nickelionen beschossen, Titankarbidpulver mit Chromionen, wobei die Dosis $5 \cdot 10^{17}$ Teilchen/cm² betrug. Beide Pulver wurden gemischt, die Mischung verpreßt und dann gesintert. Es konnte metallographisch eindeutig nachgewiesen werden, daß Nickel und Chrom an der Grenzschicht durch Diffusion ein Mischkristall bildeten.

5. Analog Beispiel 3 wurde Aluminiumoxidpulver mit Eisen implantiert und Titankarbidpulver mit Chrom. Nach dieser Implantation wurden beide Pulver oxidativ behandelt, so daß das Eisen in Eisenoxid überführt und das Chrom in Chromoxid umgewandelt wurde. Nach dem Pressen und Sintern wurde an der Phasengrenze zwischen dem Aluminiumoxid und dem Titankarbid eine eindeutige feste Bindung durch Ausbildung eines Eisen-Chrom-Spinelles nachgewiesen.

**Ansprüche**

1. Verfahren zur Herstellung von ein-oder mehrphasigen keramischen Formkörpern aus Oxiden, Karbiden und/oder Nitriden der Elemente Aluminium, Silizium, Titan, Zirkonium, Niob, Tantal, Wolfram und Molybdän durch Pressen entsprechender Pulver und Sintern der Preßlinge bei Temperaturen oberhalb 1000° C,
dadurch gekennzeichnet,
daß die Pulver vor dem Pressen einer hochenergetischen Strahlung mit Energien > 10 keV ausgesetzt werden.

2. Verfahren nach Anspruch 1,
dadurch gekennzeichnet,
daß die Pulver einer Ionenstrahlung ausgesetzt werden.

3. Verfahren nach Anspruch 1 und 2,
dadurch gekennzeichnet,
daß eine Ionenstrahlung der Elemente Stickstoff, Silizium, Eisen, Nickel und Chrom verwendet wird.

4. Verfahren nach einem der Ansprüche 1 bis 3,
dadurch gekennzeichnet,
daß die Pulver mit einer Dosis von $10^{16}$ bis $10^{18}$ Teilchen/cm² bestrahlt werden.

5. Verfahren nach einem der Ansprüche 1 bis 4,
dadurch gekennzeichnet,
daß die Energie der Strahlung 100 bis 150 keV beträgt.